Europäisches Patentamt

European Patent Office

Office européen des brevets

(19)

(11) Publication number : **0 515 111 A1**

## (12) EUROPEAN PATENT APPLICATION

(21) Application number : 92304435.8

(22) Date of filing : 15.05.92

(51) Int. Cl.⁵ : **C01B 13/11, B01J 19/08**

(30) Priority : **15.05.91 GB 9110493**

(43) Date of publication of application :
**25.11.92 Bulletin 92/48**

(84) Designated Contracting States :
**AT BE CH DE DK ES FR GB GR IT LI LU MC NL PT SE**

(71) Applicant : **EPICON ENVIRONMENTAL SYSTEMS BV**
**Industrieweg 2B**
**NL-5165 NH Waspik (NL)**

(72) Inventor : **Willis, James David**
**13 Southern Way**
**Letchworth, Hertfordshire SG6 4TD (GB)**

(74) Representative : **Britter, Keith Palmer**
**Britter & Co. The Manor House High Street**
**Baldock Hertfordshire SG7 6BD (GB)**

(54) **Apparatus and method for generating ozone.**

(57) Method and apparatus for generating ozone from gaseous oxygen, wherein oxygen gas or other gas containing oxygen is passed along a tortuous path provided by an electrode body (5) to which an electric current is applied. In the described embodiment, tortuous gas paths are provided by electrically conductive granules (5) provided in an electrically insulated housing (2) with an inlet (3) for the gas and an outlet (4) for the gas containing generated ozone. Cooling of the granular electrode (5) may be effected by subjecting the gas to a Joule-Thompson expansion at the housing inlet (3').

FIG.1

EP 0 515 111 A1

The invention relates to a method of and apparatus for generating ozone, particularly from a gas containing oxygen, such as ambient air, pure oxygen *per se* or from a combination of both.

Efficient and economic production of ozone is an important industrial process, particularly when the ozone so-produced is used in place of chlorine to sterilise water or as an oxidising agent to remove organic compounds from gas streams.

For example, most combustion processes and food processing plants emit harmful gaseous and vapour phase organic compounds, such as, hydrocarbons to the atmosphere, through some form of exhaust duct. Many, if not all of these, emitted organic compounds, are known to be harmful to the health of the populace and generally damaging to the environment. As a further example, organic compounds are deposited into them from the atmosphere by rainfall. This results in the production of other compounds on which harmful bacteria can thrive.

The processing of those emissions at source with ozone, substantially reduces the volume of such hydrocarbons emitted, by oxidising them to carbon dioxide and water vapour.

Also, the treatment of water systems with ozone, in order to kill bacteria, is environmentally safer and cleaner because, unlike chlorine, it leaves no toxic residues which have to be removed.

Hitherto, ozone has been produced electrically, by the passage of a silent electrical discharge through oxygen containing gases, such as, air. Ozone generators usually comprise two concentric tubes, one made from stainless steel forming the outer tube, the other, made from glass coated internally with a thin layer of metal, forms the inner tube and a gap is formed between the two tubes.

Dry dust free air or oxygenated gas is then passed through the gap between the tubes. The outer metal tube and the layer of metal deposited on the inside of the inner tube act as electrodes to which a high voltage alternating current is supplied. This causes a silent electrical discharge to occur between the electrodes, and as a consequence, some of the oxygen in the gas passing through the gap between the tubes, is converted to ozone.

At a voltage level of 20kV, approximately 10% of the oxygen is converted to ozone, providing the tube system is cooled. Proposed ozone generators using air as the feed gas, generally consume 12-22 kW-h/kg of ozone produced, when oxygen concentrations are 1-2% by weight. When pure oxygen is used, the ozone production rate is 2-2.5 times greater and the power requirement is reduced to 5-12 kW-h/kg of ozone produced.

Generally, the higher the voltage level, the higher the ozone production rate. However, the higher voltage levels reduce the life of the electrodes and therefore reduce the economic viability of such a known system.

It is accordingly an object of this invention to seek to encourage a wider use of ozone, by aiming to provide a method and apparatus for the economical commercial scale production of ozone.

According to one aspect of the invention, there is provided a method of generating ozone, comprising passing oxygen gas or other gas containing oxygen along a path to which a field is applied by associated electrode means,

wherein said electrode means defines a tortuous path for the passage of gas to which the field is applied to generate ozone.

According to another aspect of the invention, there is provided apparatus for generating ozone from gaseous oxygen, comprising means defining a path along which oxygen gas or other gas containing oxygen can be passed and electrode means arranged to apply a field to the path, such that, when the gas is passed along the path and a field is applied by said electrode means thereto, ozone is generated,

wherein said electrode means defines a tortuous path for the passage of gas to which the field is applied to generate ozone.

In both the inventive method and apparatus defined above, the electrode means may comprise two or more electrodes each preferably in the form of a plurality of discrete electrically conductive elements, such as, electrically conductive granules, for example, magnetite or metallic granules of, say, copper, which provide a plurality of tortuous paths through each electrode, thereby maximising the effective contact surface area of the gas therewith. Further, each electrode may be located within an electrically insulating housing with an inlet for the gas and an outlet for gas containing ozone generated during passage of the gas along the tortuous paths. Moreover, cooling of the electrode means may be effected by subjecting the gas to a Joule-Thompson expansion at, say, each housing gas inlet, using any suitable means, such as, appropriately shaped inlet nozzles.

The field which is applied to the tortuous path(s) for the oxygen or oxygen-containing gas, is preferably an electrostatic field, in which case, means may be provided for applying a potential difference between the electrodes to establish such a field. An AC potential difference is preferred, thereby applying an AC electrostatic field to the tortuous path(s).

According to yet another aspect of the invention, there is provided apparatus for use in generating ozone from oxygen gas or a gas containing oxygen, including two or more cells each comprising an electrically insulating housing with an inlet for the gas and an outlet for gas containing ozone generated therein and an electrode body in the housing providing a tortuous path for gas passing from the inlet to the outlet of the housing, and means arranged to apply a potential difference between the electrode bodies of adjacent cells, the arrangement being such that, on application of a potential difference between adjacent electrode bodies and on passage of the gas from the inlet towards the outlet of each cell, ozone is generated for subsequent passage through each housing outlet.

Each electrode body may also comprise a plurality of discrete electrically conductive elements which provide a relatively simple way to pack each housing in use and to provide the tortuous paths, which in turn increase the contact surface area of the gas with each body, so leading to enhanced generation of ozone.

The elements may, as described above, comprise metal granules, for example of copper, thereby providing relatively simple construction and operation.

Each housing may also comprise glass plates mounted on an insulating frame, with a pair of, or even more, cells mounted together. This also provides a relatively simple construction.

The potential difference may generate a field, preferably an electrostatic field, to be applied to the tortuous paths. Such a potential difference may be an AC one, in which case, the field so-generated is an AC electrostatic field.

There may be a plurality of cells mounted together and each electrically connected with electrical connecting leads for applying a potential difference between respective adjacent pairs of electrode bodies, thereby establishing the field for the tortuous paths.

According to a further aspect of the invention there is provided a system for generating ozone from ambient air, comprising, in series, a device for removing dust from the air, means arranged to raise the air pressure from ambient to a predetermined high pressure, means arranged to remove water vapour from the air, and apparatus as hereinbefore defined.

Preferably, the apparatus may be connected with a high voltage, high frequency inverter unit for applying an alternating potential difference across or between the electrode means, electrodes or electrode bodies, as the case may be and, hence, a corresponding field to the tortuous path.

The means arranged to raise the air pressure, may comprise an air compressor and, preferably, an air receiver tank.

The dust removal means may comprise an electrostatic precipitator and the water removal means may comprise one or more water traps.

Using a method, apparatus and system embodying the invention, ambient air drawn from the atmosphere by the inlet of the compressor, first passes through the electrostatic precipitator where dust is substantially reduced to very low concentrations. The air then passes through the compressor and into the air receiver where it is stored at a substantially higher pressure than atmospheric pressure.

The high pressure air is then piped from the air receiver, through a series of water traps, to the inventive apparatus where a high proportion of the oxygen contained in the air is converted to ozone which is then piped from the apparatus for subsequent use.

Apparatus and a system for generating ozone in accordance with the inventive method are hereinafter described, by way of example, with reference to the accompanying drawings in which:

Figure 1 is a schematic plan view in partial section of a cell for use in ozone generating apparatus;

Figure 2 is a side elevational view in partial section of the cell of Figure 1;

Figure 3 is a schematic plan view of an embodiment of ozone generating apparatus comprising six cells of Figure 1;

Figure 4 is an end elevational view again in partial section of the apparatus of Figure 3; and

Figure 5 is a schematic side elevational view of a system including apparatus of Figures 3 and 4.

Referring to the drawings in which like parts are referred to by like numerals, there is shown a cell indicated generally at 1 for generating ozone from a gas, such as, ambient air, containing oxygen, comprising an electrically insulating housing 2, an inlet 3 for the oxygen containing gas and an outlet 4 for gas containing generated ozone, an electrode body 5' in the housing providing a tortuous path for gases passing from the inlet 3 to the outlet 4, and means 6 for applying a potential difference to the electrode body 5, the arrangement being such that, on application of a potential difference to the electrode body 5' and on passage of the gas from the inlet 3 towards the outlet 4, ozone is generated in the housing for subsequent passage through the outlet 4.

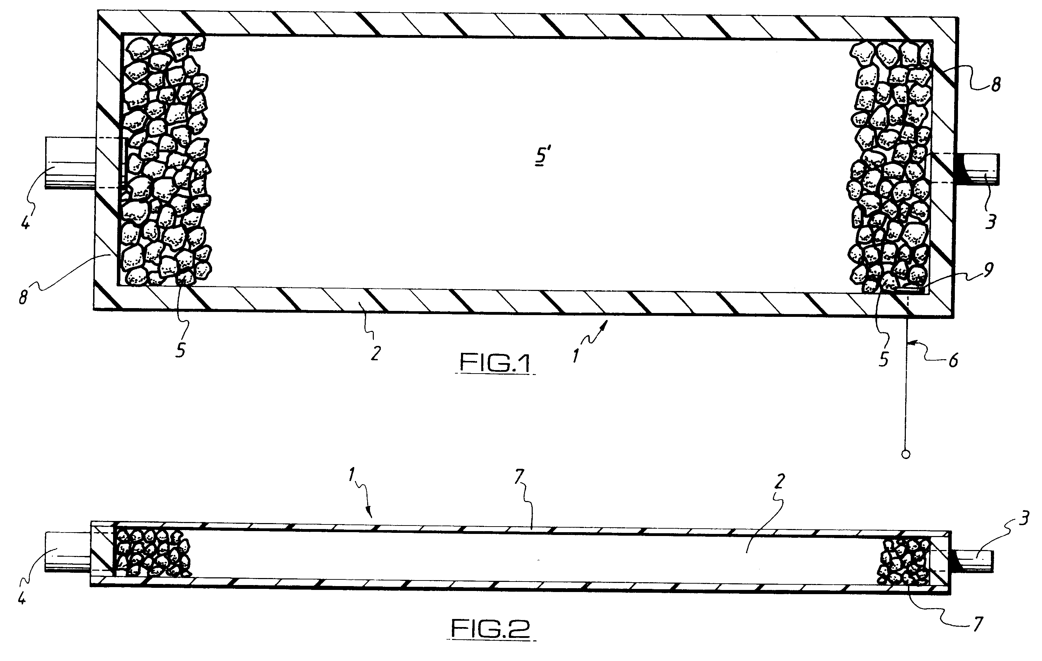

In Figures 1 and 2, the electrode body 5' is a packing of discrete granules 5, for example, of magnetite or copper, providing tortuous paths from the inlet 3 to the outlet 4 and, therefore, an increased contact time and surface area of contact for the oxygen containing gas, thereby enhancing the generation of ozone from oxygen in the gas stream.

The housing 2 comprises glass plates 7, 4mm thick in the embodiment, spaced apart and supported by insulating frames 8 which also act as supports for the oxygen containing gas inlet 3 and outlet 4 for ozone-containing gas.

An electrode 9 inserted in the housing 2 in contact with the granules 5, is connected to means 6 for applying an alternating potential difference thereto, so as to charge the electrode granules 5 and apply an AC electrostatic field to the paths for conversion of oxygen to ozone and generation of same therein.

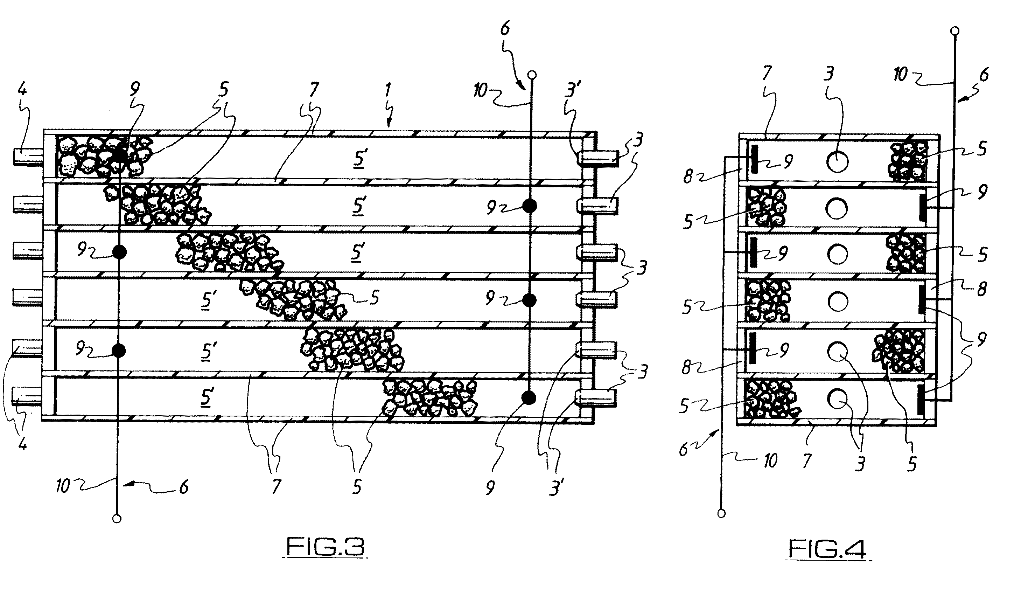

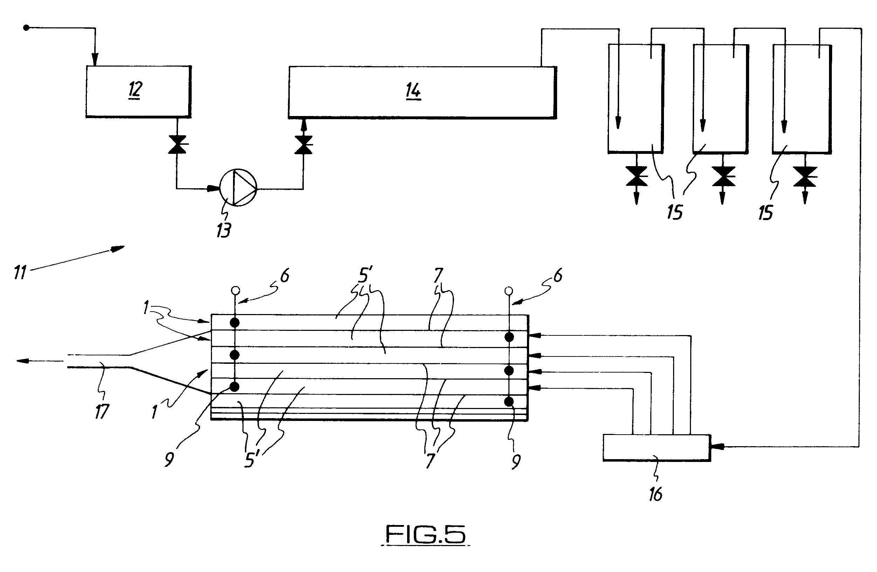

In Figures 3 and 4, there is shown apparatus comprising a plurality, six as shown effectively constituting five pairs, of cells 1 of Figures 1 and 2 mounted one with respect to another to form a composite unit, each housing 2 having electrodes 9 connected by common electrode connecting leads 10 which are, in turn, connected with a high frequency, high voltage inverter (not show) operable at 5kV at a frequency of 3000 Hertz, to apply an alternating potential difference between adjacent pairs of electrode bodies 5' and establish an AC electrostatic field across adjacent electrode housings 2 and apply such a field to the tortuous gas paths.

A system 11 is shown in Figure 5 for generating ozone from ambient air and comprises in series means for removing dust in the form of an electrostatic precipitator 12, means for increasing air pressure in the form of a compressor 13 and air receiver 14, means for removing water vapour in the form of a plurality (three) of water traps 15, an air distribution manifold 16 for feeding air under pressure to the housing inlets 3 of the six cells 1, and piping 17 for receiving ozone and gas from the housing outlets 4.

According to this embodiment of inventive system, ozone generating apparatus comprises two or more cells 1 whose respective layered bodies of metallic granules 5 are used as electrodes 5', are located in insulating frames and are sandwiched between electrically insulating glass plates 7. Each layer of granules 5 is fitted with a metallic connecting element or electrode 9 located on each frame, to which an electrical voltage can be applied by suitable means 6 to establish the AC electrostatic field. Due to the nature of the granular electrodes 5' created by this arrangement, gas can pass in a tortuous path therethrough freely in any direction.

A further aspect of the inventive apparatus and system is that the surface areas of the granular electrodes or electrode bodies 5' are increased by an order of magnitude per unit area and can withstand increased voltage levels without undue stress. Further, by utilisation of the Joule-Thompson effect by expanding high pressure air from the air distribution manifold (Figure 5) to the low pressure region of the housing 2 using appropriately shaped inlet nozzles, as shown at 3' in Figure 3, cooling can be adequately maintained throughout the electrode bodies 5' and, therefore, excess power need not be consumed by additional cooling equipment.

It will be understood that by using a combination of the granular electrodes 5 and increased voltage levels at high frequency, coupled with high pressure air inlets 3, 3', ozone can be generated at an increased rate, yield higher concentrations by weight and consume less energy than known ozone generating arrangements.

For example, one particular form of system embodying the inventive apparatus and using ambient air at an average oxygen content of 1.6% by weight and at a temperature of 8°C, operated for a period of 30 hours maintaining a steady operating temperature of 15°C, to generate ozone at a rate of 1kg per hour with an energy consumption of 7.5 kW-h.

This represents a substantial increase in overall efficiency on known methods of ozone production.

The apparatus, method and system described herein, can be used in a wide range of applications and are particularly relevant to emission control systems for combustion plant and food processing plant. They can also be used to reduce oxides of nitrogen (NOx) which are a major pollutant gas in combustion related emissions, contributing to environmental damage by causing acid rainfall.

## Claims

1. A method of generating ozone, comprising passing oxygen gas or other gas containing oxygen along a path to which a field is applied by associated electrode means,

   wherein said electrode means defines a tortuous path for the passage of gas to which the field is applied to generate ozone.

2. A method according to claim 1, wherein said electrode means comprises two or more electrodes each comprising electrically conductive granules defining a plurality of tortuous paths therethrough.

3. A method according to claim 2, wherein each electrode is located within an electrically insulating housing with an inlet for the gas and an outlet for gas containing generated ozone.

4. A method according to claim 1, 2 or 3, wherein cooling of said electrode means or each electrode, as the case may be, is effected by subjecting the gas to a Joule-Thompson expansion, preferably at the housing inlet.

5. A method according to any preceding claim, wherein the field is an electrostatic field, preferably an AC electrostatic field.

6. A method according to claim 5, wherein the electrostatic field is established by applying a potential difference, preferably an alternating potential difference, between adjacent electrodes.

7. Apparatus for generating ozone from gaseous oxygen, comprising means defining a path along which oxygen gas or other gas containing oxygen can be passed and electrode means arranged to apply a field to the path, such that, when the gas is passed along the path and a field is applied by said electrode means thereto, ozone is generated,

   wherein said electrode means defines a tortuous path for the passage of gas to which the field is applied to generate ozone.

8. Apparatus according to claim 7, wherein said electrode means comprises two or more electrodes each comprising electrically conductive granules defining a plurality of tortuous paths therethrough.

9. Apparatus according to claim 8, wherein each electrode is located within an electrically insulating housing with an inlet for the gas and an outlet for gas containing generated ozone.

10. Apparatus according to claim 7, 8 or 9 including means arranged to subject the gas to a Joule-Thompson expansion to effect cooling of said electrode means or each electrode, as the case may be, preferably at the housing inlet.

11. Apparatus according to any of claims 7 to 12, wherein said electrode means is arranged to apply an electrostatic field, preferably an AC electrostatic field, to the path(s).

12. Apparatus according to claim 11 including means arranged to apply a potential difference, preferably an alternating potential difference, between adjacent electrodes to establish the electrostatic field.

13. Apparatus for use in generating ozone from oxygen gas or a gas containing oxygen, including two or more cells each comprising an electrically insulated housing with an inlet for the gas and an outlet for gas containing generated ozone and an electrode body in the housing providing a tortuous path for gas passing from the inlet to the outlet of the housing, and means arranged to apply a potential difference between the electrode bodies of adjacent cells, the arrangement being such that, on application of a potential difference between adjacent electrode bodies and on passage of the gas from the inlet towards the outlet, ozone is generated for subsequent passage through each housing outlet.

14. Apparatus according to claim 13, wherein each electrode body comprises a plurality of discrete electrically conductive elements providing tortuous gas paths.

15. Apparatus according to claim 14, wherein the discrete electrically conductive elements comprise granules, preferably of magnetite or copper.

16. Apparatus according to claim 13, 14 or 15, wherein the housing comprises glass plates mounted on an electrically insulating frame.

17. Apparatus according to any of claims 13 to 16 including means arranged to subject the gas to a Joule-Thompson expansion at each housing inlet to effect cooling of at least the electrode bodies during use.

18. Apparatus according to any of claims 13 to 17, wherein said potential difference application means is arranged to establish an AC potential difference between adjacent electrode bodies to apply an AC electrostatic field to the tortuous paths.

19. Apparatus according to any of claims 7 to 18 including a plurality of housings mounted together and each electrically connected with electrical connecting leads for applying a potential difference between electrode bodies of adjacent housings.

20. A system for generating ozone from ambient air, comprising, in series, a device for removing dust from the air, means arranged to raise the air pressure from ambient to a predetermined higher pressure, means arranged to remove water vapour from the air, and apparatus according to any of claims 6 to 19.

FIG.1

FIG.2

EP 0 515 111 A1

FIG.3

FIG.4

EP 0 515 111 A1

FIG.5

EP 0 515 111 A1

**European Patent Office**

## EUROPEAN SEARCH REPORT

Application Number

EP 92 30 4435

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | US-A-3 023 155  (W.W. CASTOR)<br>* the whole document * | 1-3,5,7-9,11 | C 01 B  13/11<br>B 01 J  19/08 |
| A | | 13,14,16,18 | |
| X | US-A-4 351 734  (G. KAUFFMAN)<br>* the whole document * | 1,2,5,7,8,11 | |
| A | | 13,14,18 | |
| X | CH-A-  311 226  (E. HÜRLIMANN, W. WALTER)<br>* page 1, column 1, line 24 - column 2, line 63; claims * | 1-3,5,7-9,11 | |
| A | | 13,14,16 | |
| A | US-A-3 970 567  (F.E. LOWTHER)<br>* column 2, line 24 - line 68; claims 1,2,4 * | 1,5,7,11,13,14,18 | |

TECHNICAL FIELDS SEARCHED (Int. Cl.5)

C 01 B
B 01 J

The present search report has been drawn up for all claims

| Place of search | Date of completion of the search | Examiner |
|---|---|---|
| THE HAGUE | 31-08-1992 | VAN DER POEL W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
                            
& : member of the same patent family, corresponding document

EPO FORM 1503 03.82 (P0401)

9